# EUROPÄISCHE PATENTSCHRIFT

(11) **EP 4 232 324 B1**
(45) Veröffentlichungstag und Bekanntmachung des Hinweises auf die Patenterteilung: **17.04.2024**
(21) Anmeldenummer: 22801804.0
(22) Anmeldetag: 14.10.2022
(51) Int. Cl.: B60R 16/037, G01C 21/36, G06F 3/16, G08G 1/0962, G06F 40/30, G10L 13/033

(54) **VERFAHREN ZUM BETRIEB EINES SPRACHDIALOGSYSTEMS**
METHOD FOR OPERATING A VOICE DIALOG SYSTEM
PROCÉDÉ DE FONCTIONNEMENT D'UN SYSTÈME DE DIALOGUE VOCAL

(30) Priorität: 09.11.2021 DE 102021005546
(43) Veröffentlichungstag der Anmeldung: 30.08.2023
(73) Patentinhaber: Mercedes-Benz Group AG, 70372 Stuttgart (DE)
(72) Erfinder: EHRLICH, Ute, 89134 Blaustein (DE); LANDESBERGER, Jakob, 89073 Ulm (DE)
(74) Vertreter: Novagraaf Group
(86) Internationale Anmeldenummer: PCT/EP2022/078625
(87) Internationale Veröffentlichungsnummer: WO 2023/083561

(56) Entgegenhaltungen:
- DE-A1-102007 043 264
- DE-A1-102013 015 712
- US-A1- 2016 236 690

## Beschreibung

Die Erfindung betrifft ein Verfahren zum Betrieb eines Sprachdialogsystems sowie ein Sprachdialogsystem zur Durchführung des Verfahrens.

Aus der Offenlegung US 2014/0136187 A1 ist eine Verfahren bekannt, bei dem eine Sprachausgabe selbsttätig unter Berücksichtigung des Fahrzeugkontextes gestartet wird. Der Fahrzeugkontext umfasst beispielsweise Außentemperatur, Regen, Position oder Nebel. Kontextrelevante Informationen umfassen beispielsweise Anweisungen zur Bedienung der Nebelleuchten bei aufkommendem Nebel.

Aus der DE 10 2006 060 519 A1 ist eine Verfahren bekannt, in welchem insbesondere fahrzeug- und situationsbezogene Informationen nach bestimmten Kriterien bewertet und entsprechend dieser Bewertung an den Fahrer vorzugsweise in zeitlich vorherbestimmten Abständen ausgegeben werden. Dabei wird die Identität des aktuellen Fahrers beim Start des Fahrzeugs erfasst wird und die Informationen zur Ausgabe an den Fahrer in Abhängigkeit von dem aktuellen Fahrer sowie einer gespeicherten Informationsausgabehistorie des jeweiligen Fahrers ausgegeben.

Die US 2020 / 0 357 406 A1 offenbart eine Verfahren, bei dem eine Ausgabe von Informationen an einen Nutzer von verschiedenen Faktoren abhängig gemacht wird. Die Faktoren umfassen dabei beispielsweise, ob der Nutzer gerade spricht, wer die Information sendet, eine Wichtigkeit der Information, einen Bezug zu vorangegangenen Informationen oder Vorlieben des Nutzers.

Die DE 10 2007 043264 A1 offenbart eine Vorrichtung zur Ausgabe eines Sprachsignals, wobei Navigationsansagen unterschiedlichen Dringlichkeitsstufen zugeordnet sind. Diese Dringlichkeitsstufen bewirken bei einer möglichen Ausführungsform, dass je nach Inhalt der Navigationsansage eine Verkehrsdurchsage im laufenden Satz unterbrochen wird.

Aus der DE 10 2013 015712 A1 ist ein Verfahren zur Klassifizierung von Verkehrsereignissen bekannt, wobei das relevanteste Verkehrsereignis einer Liste eine Informationsausgabe an einen Nutzer auslöst. Das Verkehrsereignis wird aus der Liste gelöscht, sobald dessen Gültigkeitsdauer abgelaufen ist.

Die US 2016/236690 A1 offenbart ein Sprachdialogsystem, das eine per Sprache ausgegebene Information auf die aktuelle Situation und Kontext des Fahrers anpasst. Dies umfasst das Zurückhalten von Informationen im Moment hoher Fahrerbelastung und eine Änderung einer Stimmlage der sprachlich ausgegebenen Information bei unterschiedlichen Bedingungen. Das Sprachdialogsystem ist weiter eingerichtet an den Nutzer gerichtete Informationen unterschiedlich ausführlich auszugeben.

Aufgabe der Erfindung ist es demgegenüber ein verbessertes Verfahren bereitzustellen, das bei der Erzeugung einer selbsttätigen Sprachausgabe neben dem Kontext weitere Parameter berücksichtigt.

Die Aufgabe wird durch ein Verfahren zum Betrieb eines Sprachdialogsystems mit den Merkmalen des Anspruchs 1 sowie ein einem Sprachdialogsystem gemäß Anspruch 11 gelöst. Die abhängigen Ansprüche definieren bevorzugte und vorteilhafte Ausführungsformen der vorliegenden Erfindung.

Bei dem erfindungsgemäßen Verfahren wird überprüft, ob eine einem Fahrzeugkontext zugehörige Information dringlich ist, d.h. nur für eine kurze Zeitdauer relevant ist und eine Gültigkeitsdauer kleiner einem vorgegebenen Referenzwert aufweist, und sofern die Information dringlich ist, wird überprüft, ob die Information einen über einem Schwellenwert liegenden Wichtigkeitswert für den Nutzer aufweist, wobei sofern der Schwellenwert überschritten wird selbsttätig eine an den aktuellen Kommunikationsstatus angepasste Sprachausgabe an einen Fahrzeugnutzer ausgegeben wird.

Der Kommunikationsstatus umfasst verschiedene Zustände einer Kommunikation des Sprachdialogsystems mit dem Fahrzeugnutzer. In einem Zustand findet keine Kommunikation statt, d.h. der Fahrer und das Sprachdialogsystem gibt keine Sprachausgabe aus. In diesem Zustand ist das Sprachdialogsystem empfangsbereit und lauscht auf Sprachausgabe des Fahrzeugnutzers. Weitere Zustände umfassen eine Sprachausgabe durch den Fahrzeugnutzer oder das Sprachdialogsystem.

Eine Information ist im Sinne der vorliegenden Anmeldung dringlich, wenn sie einem zu einem Zeitpunkt stattfindenden Ereignis zugehörig und die Information nur eine sehr kurze Gültigkeitsdauer aufweist. Eine Reaktion auf ein Ereignis muss sofort oder zumindest zeitnah erfolgen, da die Information nach kurzer Zeit an Relevanz oder vollständig an Bedeutung verliert. Die vorgegebene Gültigkeitsdauer definiert den Umfang dringlicher Informationen, beispielsweise können Informationen die nach 1s oder 5s ihre Gültigkeit verlieren als dringlich definiert werden.

Dringliche Informationen sind Informationen, die auf aktuellen Sensordaten (visuell oder auch akustisch) an einer geografischen Position basieren. Dringliche Informationen betreffen z.B. das aktuelle Verkehrsgeschehen, eine zu passierende Gefahrenstelle oder ein zugehöriges Verkehrszeichen, Übernahmeaufforderung beim automatisierten Fahren oder ein in der Fahrzeugumgebung auftauchender Point of Interest.

Wichtig ist im Sinne der vorliegenden Anmeldung hingegen eine Information, die eine hohe Priorität für einen Fahrzeugnutzer aufweist, d.h. wichtige Informationen sind benutzerspezifisch. Für einen Fahrzeugnutzer wichtige Informationen mit entsprechendem Wichtigkeitswert werden in einem Benutzermodell gespeichert. Wichtige Informationen können manuell gespeichert und/oder aus dem Benutzerverhalten gelernt werden. Wichtige Informationen werden beispielsweise von Anwendungen wie einem Navigationssystem, einem Terminkalender, einem E-Mail-System generiert. Eine E-Mail von einer Person kann dabei einen größere Wichtigkeitswert als von einer anderen Person aufweisen. Wichtigkeitswerte einer Information können aber auch situationsabhängig sein, z.B. interessiert sich ein Benutzer während einer Urlaubsreise möglicherweise für touristische Informationen, auf der Fahrt zur Arbeit sind diese aber nicht wichtig. Alle Informationen über die aktuelle Verkehrssituation und die aktuelle Fahrt/Reise sind vorzugsweise als wichtig zu betrachten.

Alle Informationen können einen individuellen Grad der Wichtigkeit aufweisen, wobei vorliegend nur Informationen mit einer über einem vorgegebenen Schwellenwert liegender Wichtigkeit, d.h. mit einem über einem Schwellenwert liegenden Wichtigkeitswert berücksichtigt werden. Eine dringliche Information muss für einen Nutzer nicht immer wichtig sein. Beispielsweise ist ein POI dringlich, weil nur wenige Sekunden sichtbar aber für einen Nutzer nicht wichtig, weil an diesem POI kein Interesse besteht. Umgekehrt gibt es für den Nutzer wichtige Informationen, die nicht dringlich sind. Eine Information einer E-Mail eines Bekannten weist als Beispiel eine hohe Wichtigkeit auf ist aber nicht dringlich, da die Gültigkeitsdauer sehr lang ist.

Da im Verständnis der vorliegenden Anmeldung nur dringliche und wichtige Informationen akustisch ausgegeben werden, kann sich der Fahrzeugnutzer in vorteilhafter Weise bestmöglich auf die Fahraufgabe konzentrieren.

Erfindungsgemäß wird, sofern ein Kommunikationsstatus vorliegt, bei dem keine Kommunikation zwischen Fahrer und Sprachdialogsystem erfolgt, selbsttätig durch das Sprachdialogsystem eine erste, prosodisch hervorgehobene Sprachausgabe zur Erweckung der Aufmerksamkeit und Herstellung der Zuhörbereitschaft des Fahrzeugnutzers ausgegeben. Unter einer prosodisch hervorgehobenen ist eine gegenüber einer standardmäßigen in Intonation, Lautheit, Dauer, Sprechtempo, Rhythmus und/oder Stimmhöhe veränderte Sprachausgabe zu verstehen. Die Aufmerksamkeit des Fahrzeugnutzers wird durch die hervorgehobene Sprachausgabe geweckt, wobei die Sprachausgabe bevorzug als Apell oder Gruß formulierte Interjektion und/oder namentliche Anrede formuliert ist. In vorteilhafter Weise wird durch die erste Sprachausgabe sichergestellt, dass der Fahrer nachfolgende Information nicht überhört.

In einer weiteren zusätzlichen oder alternativen vorteilhaften Weiterbildung wird, sofern ein Kommunikationsstatus vorliegt, bei dem eine Sprachausgabe des Sprachdialogsystems erfolgt, diese unterbrochen und selbsttätig auf eine zweite, einen Themenwechsel einleitende prosodisch hervorgehobene Sprachausgabe gewechselt. Im Fall einer ablaufenden Sprachausgabe wird diese abgebrochen und auf eine von der ersten verschiedene zweite Sprachausgabe zugegriffen, die durch die prosodische Hervorhebung gegenüber der vor dem Abbruch ausgegebenen Sprache deutlich abgesetzt ist und die Aufmerksamkeit des Fahrzeugnutzers weckt.

In einer weiteren zusätzlichen oder alternativen vorteilhaften Weiterbildung wird, sofern ein Kommunikationsstatus vorliegt, bei dem der Fahrzeugnutzer spricht, selbsttätig eine prosodische dritte Sprachausgabe zur Unterbrechung, Erweckung der Aufmerksamkeit und Herstellung der Zuhörbereitschaft des Fahrzeugnutzers ausgegeben. Die dritte, von der ersten und zweiten verschiedene Sprachausgabe ist vorzugsweise entschuldigend formuliert und verfolgt das Ziel den Redefluss des Fahrers zu unterbrechen und die Zuhörbereitschaft herzustellen.

In einer weiteren Ausführungsform wird nach Ausgabe einer der ersten, zweiten oder dritten Sprachausgabe die Reaktion des Fahrers überwacht, wobei je Abhängigkeit der Reaktion der weitere Dialog gestaltet wird. Die Reaktion umfasst eine emotionale Regung, eine sprachliche Äußerung, eine durch eine Kamera erfasste Geste und/oder Gesichtsmimik als auch neutrales Verhalten, bei dem keine auf die Sprachausgabe folgende Reaktion feststellbar ist.

In weiterer Ausgestaltung des Verfahrens wird sofern der Fahrer keine oder eine negative Reaktion zeigt eine weitere, gegenüber der ersten, der zweiten oder dritten vorhergehenden Sprachausgaben prosodisch verstärkte Sprachausgabe ausgegeben. Neben der weiteren Sprachausgabe können weiter optische und akustische Signale, beispielsweise ein Piep- oder Summton, zur Erhöhung der Aufmerksamkeit ergänzt werden. Die weitere Sprachausgabe umfasst eine namentliche Anrede oder einen Apell. Im Anschluss wird wieder die Reaktion des Fahrers ausgewertet und je nach Reaktion wird der weitere Dialog ausgerichtet oder weitere Maßnahmen eingeleitet. Zeigt der Fahrzeugnutzer keine oder eine abweisende Reaktion wird der sprachliche Dialog eingestellt und bei Bedarf eine Funktion des Fahrzeugs gestartet, beispielsweise ein Fahrzeughalt, ein Lenkeingriff oder eine Geschwindigkeitsanpassung ausgeführt. Sofern der Fahrer positiv reagiert gibt das Sprachdialogsystem die dringliche Information mit einem über dem Schwellenwert liegenden Wichtigkeitswert aus. In vorteilhafter Weise werden durch das Verfahren dem Fahrzeugnutzer nur Informationen präsentiert, die er auch wünscht.

In einer weiteren vorteilhaften Ausbildung wird der Zustand des Sprachdialogsystems und/oder der Dialogverlauf bis zur Unterbrechung gespeichert und nach Ausgabe der dringlichen Information mit einem über dem Schwellenwert liegenden Wichtigkeitswert dieser Zustand dem Nutzer mitgeteilt und/oder der bisherige Dialogverlauf zumindest teilweise zusammengefasst wiederholt wiedergegeben. Hat beispielsweise vor der Unterbrechung ein Dialog stattgefunden, bei dem ein Navigationsziel ausgegeben wurde oder der Fahrzeugnutzer eine Telefonnummer anforderte, so wird dem Nutzer der Zustand des Sprachdialogsystems vor der Unterbrechung mitgeteilt, d.h. "Zurück zur Zieleingabe" oder "Willst du Herrn Müller noch anrufen?" und die bisherige Sprachaus- und/oder eingabe zumindest teilweise wiederholt. Der Nutzer kann damit seine vor der Unterbrechung begonnenen Aktivitäten ungehindert fortsetzen.

In einer Weiterbildung des Verfahrens ist der Wichtigkeitswert einer Information in einem selbstlernenden Nutzermodell gespeichert. Aus dem historischen Nutzerverhalten wird ermittelt, welche Information wichtig oder weniger wichtig sind. Hierbei werden beispielsweise Eingaben in ein mit dem Sprachdialogsystem und vorzugsweise mit dem Internet verbundenen Entertainmentsystem ausgewertet. Häufige Aktionen wie Anfragen nach touristischen Informationen oder Abfragen des Terminkalenders, Anrufen einer bestimmten Person lassen den Wichtigkeitswert von mit diesen Aktionen im Kontext stehenden Informationen oder Informationsklassen ansteigen. Der Wichtigkeitswert wird dabei personalisiert sowie auch situations- und/oder ortsabhängig in einem vorzugweise als neuronalen Netz ausgebildeten Modell erlernt.

In einer Weiterbildung des Verfahren wird jeder Klasse von Informationen eine individuelle Gültigkeitsdauer zugewiesen. Eine Information kann für einen Nutzer unterschiedliche relevant sein, beispielsweise eine Warnung eines Kreuzungsassistenten bezüglich einem querenden Fahrzeug hat ein eine sehr kurze Gültigkeitsdauer, ein Hinweis auf ein Point of Interest dagegen eine sehr viel längere Gültigkeitsdauer. Die mit individuellen Gültigkeitswerten versehenen Informationsklassen ermöglicht durch Vergleich mit dem vordefinierten Referenzwert eine Unterscheidung zwischen dringlichen und nicht dringlichen Informationen. Die Gültigkeitsdauer der Informationsklassen werden in einer Weiterbildung abhängig vom Fahrzeugkontext d.h. Tageszeit, Wetter, Straßenart- und Verlauf, Geschwindigkeit dynamisch angepasst. Beispielsweise weist bei hoher Geschwindigkeit auf einer Autobahn eine auf ein Ausfahrtschild hinweisende Information eine deutlich geringere Gültigkeitsdauer auf als bei langsamer Fahrt. Eine Information zur Übernahmeaufforderung der Fahrzeugführung zur Beendigung des autonomen Fahrbetriebs weist auf einer Autobahnfahrt mit moderater Geschwindigkeit eine andere Gültigkeitsdauer als auf einer schnell befahrenen kurvigen Landstraße.

Mit anderen Worten kann eine Information in einem Kontext dringlich und in einem anderen Kontext nicht dringlich sein, da die Gültigkeitsdauer einer Information je nach Kontext kleiner bzw. gleich oder größer dem Referenzwert sein kann

Das erfindungsgemäße System ist eingerichtet zur Durchführung des Verfahrens nach einem der vorangehenden Verfahrensschritte. Das System weist Sensoren zu Ermittlung des Fahrzeugkontextes und eine Steuereinheit zur Ermittlung von mit dem Fahrzeugkontext in Zusammenhang stehenden Informationen auf. Zu jedem Fahrzeugkontext sind beispielsweise in der Steuereinheit Information hinterlegt. Die Steuereinheit ermittelt weiter eine der Information zugehörigen Gültigkeitsdauer und vergleicht diese mit einem vordefinierten Referenzwert. Ist die Gültigkeitsdauer kleiner als der Referenzwert, dann ist die Information als dringlich einzustufen. Die Steuereinheit überprüft weiter, ob die Information einen vorgegebenen Schwellenwert überschreitenden Wichtigkeitswert aufweist. Der Wichtigkeitswert gibt wieder wie inhaltlich relevant eine Information für einen Nutzer ist. Der Wichtigkeitswert jeder Information ist im Steuergerät gespeichert und wird vorzugsweise dynamisch entsprechend dem Nutzerverhalten angepasst. Der Wichtigkeitswert einer Information kann für alle Nutzer gleichbedeutend sein, in einer alternativen oder zusätzlichen Weiterbildung ist der Wichtigkeitswert von Informationen personalisiert in einem Profil des Fahrzeugnutzers d.h. dem Fahrer gespeichert. Sofern die Information dringlich ist und den Schwellenwert überschreitet gibt das Steuergerät selbsttätig, d.h. proaktiv von sich aus einen an den Kommunikationsstatus angepasste Sprachausgabe aus.

Weitere Vorteile, Merkmale und Einzelheiten ergeben sich aus der nachfolgenden Beschreibung, in der - gegebenenfalls unter Bezug auf die Zeichnung- zumindest ein Ausführungsbeispiel im Einzelnen beschrieben ist. Beschriebene und/oder bildlich dargestellte Merkmale können für sich oder in beliebiger, sinnvoller Kombination den Gegenstand der Erfindung bilden, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Dabei zeigen:
- Fig. 1: Verfahren zum Betrieb eines Sprachdialogsystems und
- Fig. 2: ein Sprachdialogsystem.

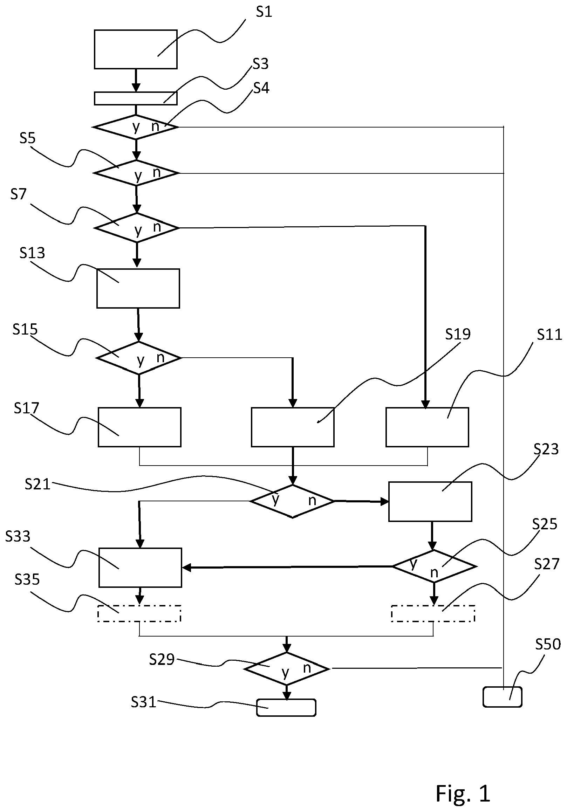

Gemäß Fig.1 ist eine Verfahren zum Betrieb eine Sprachdialogsystems dargestellt, bei dem im Schritt S1 der Fahrzeugkontext ermittelt wird. Der Fahrzeugkontext umfasst beispielsweise die Verkehrssituation beim automatisierten Fahren oder die Situation außerhalb des fahrenden Fahrzeugs, d.h. Objekte, Point of Interest, Personen, Verkehrsschilder, außerhalb des Fahrzeugs, Fahrbahnmarkierungen, Stauende, querende Fahrzeuge, Wetterbedingungen etc. Im nächsten Schritt S3 wird ermittelt, welche Informationen zu dem von Sensoren ermittelten Fahrzeugkontext zur Ausgabe an einen Fahrer gespeichert sind oder generiert werden können. Im Schritt S4 wird überprüft, ob die zu dem Kontext zugehörigen Informationen dringlich sind. Dazu wird überprüft, ob die Gültigkeitsdauer unterhalb einem vorgegebenen Referenzwert liegen. Liegt die Gültigkeitsdauer unter dem Referenzwert ist die Information dringlich und muss unverzüglich ausgegeben werden, um für den Fahrzeugnutzer noch zeitlich relevant zu sein. Ist die Information nicht dringlich wird keine proaktive Ausgabe gestartet und das Verfahren im Schritt S50 beendet. Ist die Information dringlich, dann wird im Schritt S5 die Wichtigkeit überprüft. Ein Wichtigkeitswert gibt die inhaltliche Relevanz für den Fahrzeugnutzer wieder. Eine Information kann für einen Fahrzeugnutzer wichtig und für einen anderen unwichtig sein. Liegt der Wichtigkeitswert unterhalb einem vorgegebenen Schwellenwert, wird die proaktive Ausgabe im Schritt S50 beendet. Liegt der Wichtigkeitswert über dem Schwellenwert, dann ist die Information für den Fahrzeugnutzer auch inhaltlich von Relevanz und das Verfahren setzt sich im Schritt S7 fort. Im Schritt S7 wird der Kommunikationsstatus überprüft, d.h. ob ein aktuell Sprachdialog stattfindet oder nicht. Findet aktuell kein Dialog statt, dann erfolgt im Schritt S11 selbsttätig eine erste, prosodisch hervorgehobene Sprachausgabe zur Erweckung der Aufmerksamkeit und Herstellung der Zuhörbereitschaft des Fahrzeugnutzers. Die erste Sprachausgabe umfasst einer Interjektion, d.h. einen Apell oder Gruß und/oder eine namentliche Anrede mit prosodischer Hervorhebung, z.B. "Hallo!", "es ist wichtig!" oder "Herr Müller".

Wird in Schritt S7 ein laufender Sprachdialog ermittelt, dann wird im Schritt S13 der Dialog unterbrochen sowie der Dialogzustand d.h. Art des Dialogs und bis zur Unterbrechung erfolgter Dialog gespeichert. Der laufende Sprachdialog umfasst eine Sprachausgabe des Dialogsystems und/oder eine Sprachausgabe des Fahrzeugnutzers, beispielsweise eine allgemeine oder eine an das Dialogsystem gerichtet Sprachausgabe. Eine Sprachausgabe des Nutzers ist beispielsweise an das Dialogsystem gerichtet, sofern vorab eine Nennung eines Schlüsselwortes erfolgt ist oder diese eine Erwiderung auf eine Sprachausgabe des Dialogsystems darstellt.

Im Schritt S15 wird ermittelt, wer bis zur Unterbrechung eine Sprachäußerung getätigt hat. Im Falle, dass das Dialogsystem im Zeitpunkt der Unterbrechung einer Sprachausgabe getätigt hat, wird im Schritt S17 selbsttätig auf eine zweite, einen Themenwechsel einleitende prosodisch hervorgehobene Sprachausgabe gewechselt. Der Wechsel umfasst eine Sprechpause und eine den Themenwechsel beinhaltende Interjektion, beispielsweise "Übrigens" oder "Richten Sie den Blick nach rechts".

Wird in Schritt S15 festgestellt, dass nicht das Dialogsystem eine Sprachausgabe getätigt hat, sondern der Fahrzeugnutzer spricht, dann wird im Schritt 19 selbsttätig eine prosodische dritte Sprachausgabe zur Unterbrechung, Erweckung der Aufmerksamkeit und Herstellung der Zuhörbereitschaft des Fahrzeugnutzers ausgegeben. Die Unterbrechung umfasst vorzugsweise eine Interjektion in Form einer Entschuldigung, beispielsweise "Ich muss Sie leider unterbrechen!".

Nach Ausgabe einer der drei Sprachausgaben wird im Schritt S 21 die Reaktion des Fahrers überprüft. Unterschieden wird eine positive oder negative bzw. keine Reaktion. Die Reaktion kann beispielsweise eine sprachliche Äußerung oder auch eine über Kamera erfasst Rückmeldung in Form einer Geste und/oder eines Gesichtsausdrucks umfassen. Eine ablehnende Reaktion ist beispielsweise ein Kopfschütteln, ein Abwinken mit einer Hand oder eine abweisende sprachliche Äußerung. Ist im Schritt S21 keine oder eine negative Reaktion feststellbar, d.h. ablehnend, dann wird im Schritt S23 eine weitere einen Apell umfassende Interjektion und/oder eine namentliche Anrede begleitet von einem akustischen Signal (beep) mit einer gegenüber einer der vorgehergehenden drei sprachlichen Äußerungen verstärkt prosodischer Hervorhebung ausgegeben, beispielsweise "Bitte zuhören, die Information ist sehr wichtig".

Im Schritt S25 wird die Reaktion des Nutzers erneut überprüft, bleibt die Reaktion weiter negativ wird je nach Informationsklassen direkt zum Schritt S29 oder zuerst zum Schritt S27 gewechselt, bei dem eine nicht sprachliche Reaktion des Fahrzeugs erfolgt, beispielsweise wird nach nicht erfolgter Übernahme der Fahrzeugsteuerung durch den Fahrzeugnutzer ein Nothalt eingeleitet. Ergibt die Prüfung in Schritt S29, dass im Schritt S13 ein Dialogzustand gespeichert wurde, dann wird im Schritt S31 dieser Zustand dem Nutzer mitgeteilt und/oder ein bisheriger Dialog dem Nutzer zumindest teilweise zusammengefasst wiederholt wiedergegeben. Ist kein Dialogzustand gespeichert wird die proaktive Ausgabe im Schritt S50 beendet.

Ist die Reaktion im Schritt S21 positiv, d.h. bejahend beispielsweise ausgedrückt durch Kopfnicken, Lächeln oder sprachlicher Äußerung, wird im Schritt S33 die Information ausgegeben. Unter Information ist im Verständnis der vorliegenden Anmeldung beispielsweise eine Aufforderung, ein Vorschlag als auch eine Information als solche, beispielsweise zu einem Point of Interest zu verstehen.

Im Fall, dass der Fahrzeugnutzer mit einer Frage reagiert, wird im optionalen Schritt S35 ein Dialog zur Klärung geführt. Ergibt die Prüfung in Schritt S29 wiederum, dass im Schritt S13 ein Dialogzustand gespeichert wurde, dann wird im Schritt S31 dieser Zustand dem Nutzer mitgeteilt und/oder ein bisheriger Dialog dem Nutzer zumindest teilweise zusammengefasst wiederholt wiedergegeben. Ist kein Dialogzustand gespeichert wird die proaktive Ausgabe im Schritt S50 beendet.

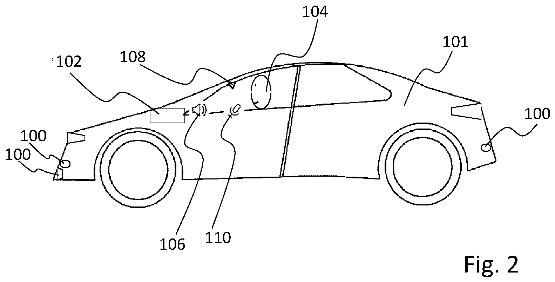

Fig. 2 zeigt ein System eingerichtet zur Durchführung des vorab beschriebenen Verfahrens. Das im Kraftfahrzeug 101 implementierte System weist Sensoren 100 zur Ermittlung des Fahrzeugkontextes und eine Steuereinheit 102 zur Ermittlung von mit dem Fahrzeugkontext in Zusammenhang stehenden Informationen auf. Die Sensoren 100 sind beispielsweise als Ultraschall-, Radar- oder Lidarsensoren und/oder als Kamera ausgeführt. Zu jedem Fahrzeugkontext sind beispielsweise in der Steuereinheit 102 Information hinterlegt. Die Steuereinheit 102 ermittelt weiter eine der Information zugehörigen Gültigkeitsdauer und vergleicht diese mit einem vordefinierten Referenzwert. Ist die Gültigkeitsdauer kleiner als der Referenzwert, dann stuft das Steuergerät 102 die Information als dringlich ein. Die Steuereinheit 102 überprüft weiter, ob die Information einen vorgegebenen Schwellenwert überschreitenden Wichtigkeitswert aufweist. Der Wichtigkeitswert gibt eine inhaltliche Relevanz einer Information für einen Fahrzeugnutzer 104 ist. Der Wichtigkeitswert jeder Information ist im Steuergerät 102 gespeichert und wird vorzugsweise dynamisch entsprechend dem Nutzerverhalten und dem Fahrzeugkontext angepasst. Der Wichtigkeitswert einer Information kann für alle Nutzer gleich groß sein, in einer alternativen oder zusätzlichen Weiterbildung ist der Wichtigkeitswert von personalisiert in der Steuereinheit gespeichert. Das System weist weiter Lautsprecher 106 auf, sofern die Information dringlich ist und den Schwellenwert überschreitet gibt das Steuergerät 102 selbsttätig über die Lautsprecher 106, d.h. proaktiv von sich aus eine von den drei, an den Kommunikationsstatus angepasste Sprachausgabe aus. Spracheingaben des Fahrzeugnutzers 104 werden über ein Mikrofon 110 zur Auswertung an das Steuergerät 102 übermittelt. Mittels einer von dem System umfassten Kamera 108 und dem Mikrofon 106 wird eine Reaktion des Nutzers auf eine Sprachausgabe ermittelt.

## Patentansprüche

1. Verfahren zum Betrieb eines Sprachdialogsystems mit folgenden Schritten:
- Ermittlung eines Fahrzeugkontexts (S1) und
- Ermittlung einer mit dem Fahrzeugkontext in Zusammenhang stehenden, in einer Steuereinheit hinterlegten Information (S3), **gekennzeichnet durch**,
- Überprüfung, ob die Information eine Gültigkeitsdauer kleiner einem vordefinierten Referenzwert aufweist und somit als dringlich einzustufen ist (S4), und sofern die Information dringlich ist,
- Überprüfung, ob die Information für einen Fahrzeugnutzer einen einen vorgegebenen Schwellenwert überschreitenden manuell gespeicherten oder aus einem Benutzerverhalten erlernten Wichtigkeitswert aufweist (S5),
- wobei, sofern auch der Schwellenwert überschritten wird, selbsttätig eine an einen aktuellen Kommunikationsstatus des Sprachdialogsystems angepasste Sprachausgabe an den Fahrzeugnutzer ausgegeben wird (S11, S17, S19), wobei, sofern ein Kommunikationsstatus vorliegt, bei dem keine Kommunikation zwischen dem Fahrzeugnutzer und dem Sprachdialogsystem erfolgt, selbsttätig die Sprachausgabe als eine von der Information verschiedene erste, prosodisch hervorgehobene Sprachausgabe zur Erweckung der Aufmerksamkeit und Herstellung der Zuhörbereitschaft des Fahrzeugnutzers ausgegeben wird (S11).

2. Verfahren nach Anspruch 1,
**dadurch gekennzeichnet, dass**, sofern ein Kommunikationsstatus vorliegt, bei dem eine ablaufende Sprachausgabe des Sprachdialogsystems erfolgt, diese unterbrochen (S13) und selbsttätig auf eine zweite von der Information verschiedene und einen Themenwechsel einleitende prosodisch hervorgehobene Sprachausgabe gewechselt wird (S17).

3. Verfahren nach Anspruch 1,
**dadurch gekennzeichnet, dass**, sofern ein Kommunikationsstatus vorliegt, bei dem der Fahrzeugnutzer spricht, selbsttätig (S13) die Sprachausgabe als eine prosodisch von der Information verschiedene dritte Sprachausgabe zur Unterbrechung, Erweckung der Aufmerksamkeit und Herstellung der Zuhörbereitschaft des Fahrzeugnutzers ausgegeben wird (S19).

4. Verfahren nach einem der vorhergehenden Ansprüche,
**dadurch gekennzeichnet, dass**, nach Ausgabe einer der ersten, zweiten oder dritten Sprachausgabe (S11, S17, S19) die Reaktion des Fahrzeugnutzers überwacht wird (S21).

5. Verfahren nach Anspruch 4,
**dadurch gekennzeichnet, dass**, sofern der Fahrzeugnutzer keine oder eine abweisende Reaktion zeigt, eine weitere, gegenüber der ersten, der zweiten oder der dritten vorhergehenden Sprachausgabe prosodisch verstärkte Sprachausgabe erfolgt (S23).

6. Verfahren nach einem der Ansprüche 4 oder 5,
**dadurch gekennzeichnet, dass**, sofern der Fahrer bejahend reagiert, das Sprachdialogsystem die dringliche Information mit dem über dem Schwellenwert liegenden Wichtigkeitswert ausgibt (S33).

7. Verfahren nach einem der Ansprüche 2 bis 6,
**dadurch gekennzeichnet, dass**
der Zustand des Sprachdialogsystems und/oder ein Dialogverlauf bis zur Unterbrechung gespeichert (S13) und nach Ausgabe der dringlichen Information mit dem über dem Schwellenwert liegenden Wichtigkeitswert (S33) dieser Zustand dem Nutzer mitgeteilt und/oder ein bisheriger Dialog dem Nutzer zumindest teilweise zusammengefasst wiederholt wiedergegeben wird (S31).

8. Verfahren nach einem der Ansprüche 1 bis 7,
**dadurch gekennzeichnet, dass**
der Wichtigkeitswert der Information selbstlernend aus historischem Nutzerverhalten ermittelt wird.

9. Verfahren nach einem der Ansprüche 1 bis 8,
**dadurch gekennzeichnet, dass** Klassen von Informationen jeweils eine individuelle Gültigkeitsdauer zugewiesen wird.

10. Verfahren nach Anspruch 9,
**dadurch gekennzeichnet, dass**
die individuelle Gültigkeitsdauer in Abhängigkeit vom Fahrzeugnutzer- und/oder Fahrzeugkontext angepasst wird.

11. Sprachdialogsystem eingerichtet zur Durchführung des Verfahrens nach einem der Ansprüche 1 bis 10.

## Claims

1. Method for operating a speech dialog system, comprising the following steps:
- determining a vehicle context (S1) and
- determining information (S3) which is stored in a control unit and is associated with the vehicle context,
**characterized by**
- checking whether the information has a period of validity less than a predefined reference value and should thus be classified as urgent (S4), and, if the information is urgent,
- checking whether, for a vehicle user, the information has an importance value (S5), manually stored or learned from a user behavior, that exceeds a predetermined threshold value,
- wherein,
if the threshold value is also exceeded, a speech output adapted to a current communication status of the speech dialog system is automatically output (S11, S17, S19) to the vehicle user, wherein, if there is a communication status in which there is no communication between the vehicle user and the speech dialog system, the speech output is automatically output (S11) as a prosodically stressed first speech output, which is different from the information, in order to attract the attention of and establish the readiness to listen of the vehicle user.

2. Method according to claim 1,
**characterized in that**
if there is a communication status in which a running speech output of the speech dialog system is taking place, the speech output is interrupted (S13) and automatically changed (S17) to a prosodically stressed second speech output which is different from the information and introduces a change in topic.

3. Method according to claim 1,
**characterized in that**
if there is a communication status in which the vehicle user speaks, the speech output is automatically (S13) output (S19) as a third speech output, which is prosodically different from the information, in order to interrupt, to attract the attention of and to establish the readiness to listen of the vehicle user.

4. Method according to any of the preceding claims,
**characterized in that**
after outputting one of the first, second or third speech output (S11, S17, S19), the response of the vehicle user is monitored (S21).

5. Method according to claim 4,
**characterized in that**
if the vehicle user shows no reaction or shows a dismissing reaction, a further speech output takes place (S23), which is prosodically intensified with respect to the first, the second or the third preceding speech output.

6. Method according to any of claims 4 or 5,
**characterized in that**
if the driver reacts affirmatively, the speech dialog system outputs (S33) the urgent information having the importance value above the threshold value.

7. Method according to any of claims 2 to 6,
**characterized in that**
the state of the speech dialog system and/or a dialog course is stored (S13) until the interruption and, after outputting the urgent information having the importance value (S33) above the threshold value, this state is communicated to the user and/or a previous dialog is repeatedly played back (S31) to the user in an at least partly summarized manner.

8. Method according to any of claims 1 to 7,
**characterized in that**
the importance value of the information is determined in a self-learning manner from historical user behavior.

9. Method according to any of claims 1 to 8,
**characterized in that**
an individual validity period is assigned to each class of information.

10. Method according to claim 9,
**characterized in that**
the individual validity period is adapted depending on the vehicle user and/or vehicle context.

11. Speech dialog system configured to carry out the method according to any of claims 1 to 10.

## Revendications

1. Procédé pour faire fonctionner un système à commande vocale, comprenant les étapes suivantes :
- détermination d'un contexte de véhicule (S1) et
- détermination d'une information (S3) liée au contexte de véhicule et stockée dans une unité de commande,
**caractérisé par**
- la vérification que l'information présente une durée de validité inférieure à une valeur de référence prédéfinie et qu'elle doit dès lors être considérée (S4) comme urgente, et pour autant que l'information est urgente,
- la vérification que l'information présente (S5), pour un utilisateur du véhicule, une valeur d'importance enregistrée manuellement et dépassant une valeur seuil prédéterminée ou apprise d'un comportement d'utilisateur,
- dans lequel,
pour autant que la valeur seuil est également dépassée, une sortie vocale adaptée à un état de communication effectif du système à commande vocale est automatiquement délivrée (S11, S17, S19) à l'utilisateur du véhicule, dans lequel, pour autant qu'un état de communication est disponible, état dans lequel aucune communication n'a lieu entre l'utilisateur du véhicule et le système à commande vocale, la sortie vocale est automatiquement délivrée (S11) sous la forme d'une première sortie vocale prosodiquement mise en évidence et différente de l'information, pour éveiller l'attention et préparer la capacité d'écoute de l'utilisateur du véhicule.

2. Procédé selon la revendication 1,
**caractérisé en ce que,**
pour autant qu'un état de communication est disponible, état dans lequel une sortie vocale du système à commande vocale est en cours, cette sortie vocale est interrompue (S13) et est automatiquement remplacée (S17) par une deuxième sortie vocale prosodiquement mise en évidence, différente de l'information et introduisant un changement de thème.

3. Procédé selon la revendication 1,
**caractérisé en ce que,**
pour autant qu'un état de communication est disponible, état dans lequel l'utilisateur du véhicule parle, la sortie vocale est automatiquement (S13) délivrée (S19) sous la forme d'une troisième sortie vocale prosodiquement différente de l'information pour l'interruption, l'éveil de l'attention et la préparation de la capacité d'écoute de l'utilisateur du véhicule.

4. Procédé selon l'une des revendications précédentes,
**caractérisé en ce que,**
après l'émission de l'une parmi la première, deuxième ou troisième sortie vocale (S11, S17, S19), la réaction de l'utilisateur du véhicule est surveillée (S21).

5. Procédé selon la revendication 4,
**caractérisé en ce que,**
pour autant que l'utilisateur du véhicule ne montre aucune réaction ou montre une réaction négative, il se produit (S23) une sortie vocale supplémentaire prosodiquement renforcée par rapport à la première, deuxième ou troisième sortie vocale précédente.

6. Procédé selon l'une des revendications 4 ou 5,
**caractérisé en ce que,**
pour autant que le conducteur réagit par l'affirmative, le système à commande vocale délivre (S33) l'information urgente comportant la valeur d'importance supérieure à la valeur seuil.

7. Procédé selon l'une des revendications 2 à 6,
**caractérisé en ce que**
l'état du système à commande vocale et/ou un historique des interactions est enregistré (S13) jusqu'à l'interruption et, après l'émission de l'information urgente comportant la valeur d'importance (S33) supérieure à la valeur seuil, cet état est transmis à l'utilisateur et/ou une ancienne interaction est lue (S31) de manière répétée, au moins partiellement de façon résumée, à l'utilisateur.

8. Procédé selon l'une des revendications 1 à 7,
**caractérisé en ce que**
la valeur d'importance de l'information est déterminée par auto-apprentissage à partir de l'historique de comportement de l'utilisateur.

9. Procédé selon l'une des revendications 1 à 8,
**caractérisé en ce que**
une durée de validité individuelle est attribuée respectivement à des catégories d'informations.

10. Procédé selon la revendication 9,
**caractérisé en ce que**
la durée de validité individuelle est adaptée en fonction du contexte d'utilisateur du véhicule et/ou de véhicule.

11. Système à commande vocale configuré pour la mise en oeuvre du procédé selon l'une des revendications 1 à 10.
